# EUROPEAN PATENT APPLICATION

(11) **EP 3 543 104 A2**
(43) Date of publication of application: **25.09.2019**
(21) Application number: 19164850.0
(22) Date of filing: 25.03.2019
(51) Int. Cl.: B62M 6/75, A61B 5/22, B62M 6/45, B62H 3/06, B62J 99/00, B62K 23/02

(54) **FRICTION DRIVE SYSTEM FOR BICYCLE**

(30) Priority: 23.03.2018 US 201862647223 P
(71) Applicant: Alizeti Ubimobil Inc., Montreal, QC H1P 3K9 (CA)
(72) Inventor: VIGLIONE, Luigi, St-Léonard, QC H1P 1M4 (CA); PRIMIANI, Paolo, Laval, QC H7E 5M2 (CA); LONGCHAMP, Julien, La Prairie, QC J5R 2S4 (CA)
(74) Representative: Weickmann & Weickmann PartmbB

(57) **Abstract**

There is disclosed a friction drive system for a bicycle, which enables a bicycle to be converted into an electrically assisted bicycle. The system includes a driving system including a friction roller in driven engagement with a motor of the driving system. The friction roller defines a wheel engaging surface configured for engaging a wheel of the bicycle via friction between the wheel engaging surface and the wheel. A controller is operatively connected to a traction control system, for controlling a torque exerted by the friction roller on the wheel, and/or to an adjustable pressure system, for moving the wheel engaging surface and varying a contact force exerted between the friction roller and the wheel of the bicycle.

## Description

### TECHNICAL FIELD

The application relates generally to bicycles and, more particularly, to systems and methods used to convert a bicycle into an electrically-driven motorized bicycle (e.g. an electric bicycle).

### BACKGROUND OF THE ART

Electric bicycles are drivable by both human power and via electric power. An electric bicycle powertrain is typically composed of three elements: an electric motor, a motor controller for controlling the electric motor, and a battery pack. Most commonly, electric motors are housed within the axle of one of the wheels of a bicycle or at the bottom bracket of the frame of the bicycle. However, in order to house a motor in these locations, substantial modifications may need to be performed to some or all of the bicycle frame, the fork, and/or the wheel. The battery pack is typically attached separately to the bicycle frame. However, those components cannot be integrated into the frame of existing conventional bicycles without significant modifications. Moreover, independently attaching all these components to the frame involves significant modifications to the standard bicycle and can lead to a complex and inconvenient system.

As an alternative, it is possible to use a friction drive system in which a friction roller directly contacts a tire of one of the bicycle wheels and is used to transfer assistance power from a motor to the bicycle wheel. This configuration may offer more affordable and lighter-weight drive systems, however drawbacks from such existing friction drive configurations include extra wear on the bicycle tire as well as a weak adherence between the roller and the tire, especially in wet conditions.

### SUMMARY OF THE INVENTION

In one aspect, there is provided a friction drive system for a bicycle, comprising: a housing configured to be secured to a frame of the bicycle; a friction roller rotatably mounted to the housing via an actuator, the friction roller defining a wheel engaging surface configured for engaging a wheel of the bicycle and for driving the wheel via friction between the wheel engaging surface and the wheel, the wheel engaging surface movable relative to an axis of rotation of the wheel between a plurality of positions; a motor secured to the housing and in driving engagement with the friction roller, the motor operatively connected to a power source; and a control system including: a traction control system operatively connected to both of the motor and the power source, the traction control system having a current modulator operable to vary a magnitude of a current distributed from the power source to the motor for varying a torque exerted by the friction roller; and/or a pressure control system operatively connected to the actuator and controlling the actuator for varying the distance between the wheel engaging surface and the axis of rotation of the wheel for varying a contact force between the friction roller and the wheel.

In another aspect, there is provided an exerciser comprising: a support device securable to a bicycle and configured to distance a rear wheel of the bicycle from a ground when the bicycle is secured to the support device; a friction drive system securable to the bicycle at a location spaced apart from the support device, for opposing rotation of the rear wheel of the bicycle, the friction drive system including a friction roller and a motor in driving engagement with the friction roller, the friction roller defining a wheel engaging surface configured for engaging the rear wheel of the bicycle and for being driven by the rear wheel via friction between the wheel engaging surface and the rear wheel, the motor operatively connected to a load for dissipating electrical energy generated from mechanical energy provided by a user and transmitted from the rear wheel to the friction roller.

In still another aspect, there is provided a friction drive system for a bicycle, the friction drive system comprising: a housing configured to be secured to a frame of the bicycle; and a driving system secured to the housing, the driving system including a friction roller rotatably mounted thereto, and a motor in driving engagement with the friction roller, the friction roller defining a wheel engaging surface configured for engaging a wheel of the bicycle and for driving the wheel via friction between the wheel engaging surface and the wheel, the driving system further including a traction control system adjusting a torque of the friction roller and/or an adjustable pressure system moving the friction roller relative to the housing and the wheel for varying a contact force between the friction roller and the wheel, the driving system further including a driving controller operatively connected to the traction control system and/or to the adjustable pressure system for controlling the torque exerted by the friction roller and/or the contact force between the friction roller and the wheel.

In yet another aspect, there is provided a method for controlling traction in a friction drive system for a bicycle, the friction drive system having a roller in frictional engagement with a wheel of the bicycle, the method comprising: receiving a torque request from a user; converting the torque request in an adjusted torque command; sending the adjusted torque command to a motor of the friction drive system, the motor in driving engagement with the roller; determining a slip ratio and a friction coefficient between the roller and the wheel in function of a rotational speed of the roller and a torque on the roller; determining an optimal slip ratio of the friction drive system in function of the determined slip ratio and friction coefficient; and determining an updated value of the adjusted torque command in function of the determined optimal slip ratio and the determined slip ratio.

In still yet another aspect, there is provided a handlebar controller, comprising: a body securable to a handlebar of the bicycle; a cover disposed over the body and movable relative to the body; a plurality of buttons secured to the cover or the body, the plurality of buttons being actuatable via movements of the cover relative to the body, wherein the cover defines contact areas engageable by a user, a number of the contact areas greater than a number of the buttons, the contact areas including primary areas and at least one secondary area, each of the primary areas associated with a respective one of the plurality of buttons such that engagement of each of the primary areas actuates solely a respective one of the plurality of buttons, the at least one secondary area associated with at least two of the plurality of buttons such that engagement of the at least one secondary area actuates at least two of the plurality of buttons; and a controller operatively connected to the plurality of buttons, the controller receiving input signals from the plurality of buttons and generating an output signal in function of the contacting areas engaged by the user.

In accordance with one aspect, there is provided a friction drive system for a bicycle, the friction drive system comprising: a housing configured to be secured to a frame of the bicycle; a driving system secured to the housing, the driving system including a friction roller rotatably mounted thereto and in driven engagement with a motor of the driving system, the friction roller defining a wheel engaging surface configured for engaging a wheel of the bicycle and for driving the wheel via friction between the wheel engaging surface and the wheel; and a controller operatively connected to at least one of a traction control system and an adjustable pressure system, the traction control system controlling a torque exerted by the friction roller on the wheel, and the adjustable pressure system moving the friction roller relative to the housing and the wheel for varying a pressure force exerted by the friction roller on the wheel of the bicycle.

The traction control system of the friction drive system may also include, in a particular embodiment, an anti-slip controller module operatively connected to the driving system for converting a torque input from a user in an adjusted torque command and for feeding the adjusted torque command to the motor of the driving system; an estimator module operatively connected to the driving system for determining a rotational speed of the friction roller and a torque exerted by the wheel on the friction roller; and a classifier module operatively connected to both of the anti-slip controller and the estimator module for determining an optimal slip ratio in function of the determined rotational speed and of the determined torque and for feeding the determined optimal slip ratio to the anti-slip controller for generating an updated value of the adjusted torque command.

There is also provided, in accordance with another aspect, a method for controlling traction in a friction drive system for a bicycle, the friction drive system having a roller in frictional engagement with a wheel of the bicycle, the method comprising: receiving a torque request from a user; converting the torque request in an adjusted torque command; sending the adjusted torque command to a motor of the friction drive system, the motor in driving engagement with the roller; determining a slip ratio and a friction coefficient between the roller and the wheel in function of a rotational speed of the roller and a torque on the roller; determining an optimal slip ratio of the friction drive system in function of the determined slip ratio and friction coefficient; and determining an updated value of the adjusted torque command in function of the determined optimal slip ratio and the determined slip ratio.

There is also provided, in accordance with a further aspect, a traction control system for controlling a torque exerted by a friction roller on a wheel of a bicycle, the traction control system comprising: an anti-slip controller module operatively connected to a driving system driving the friction roller for converting a torque input from a user in an adjusted torque command and for feeding the adjusted torque command to a motor of the driving system; an estimator module operatively connected to the driving system for determining a rotational speed of the friction roller and a torque exerted by the wheel on the friction roller; and a classifier module operatively connected to both of the anti-slip controller and the estimator module for determining an optimal slip ratio in function of the determined rotational speed and of the determined torque and for feeding the determined optimal slip ratio to the anti-slip controller for generating an updated value of the adjusted torque command.

Electric friction drive system consist of a bicycle rack into which is integrated a battery compartment, and may include an audio sound system, brake and turns lights, inertia measurement unit, power electronics, electric motor, friction drive and automatic pressure control.

An enclosure on the bicycle rack may contain an audio sound system. The audio system may be located in a water resistant compartment. The enclosure may also contain a battery compartment that may be accessed by a tailgate which may be equipped with a mechanical lock. The lock must be open to remove or add one or more battery packs. The battery packs have a single connector which allows both power and communication with the main unit. A battery management system may be included inside the battery pack.

A front light may be integrated inside a handlebar controller. This light may be used in flashing or steady mode. This light might provide extra safety to the user by signaling its presence and by illuminating the road ahead. Braking and turning lights may be located at the rear of the system. These lights might also increase the user's safety by signaling its presence and by reacting to its action. For example, the braking light might turn on if the user brakes and the turning lights might flash if the user leans or change direction of linear motion in order to take a turn.

The propulsion system may be controlled by the user via an external device that can be mounted on the bicycle handlebar. This device may be a small controller that may include buttons, front light and display. The handlebar controller interface may include display and easy to use buttons in a water resistant housing.

The system includes a main controller that includes one or more microcontrollers. The main controller communicates to other electronics devices such as the handlebar controller, the battery management system and the power electronics through a physical communication bus. The main controller may be able to transmit wireless information to others electronic devices. The main controller may be equipped with sensors including, but not limited to, accelerometer(s) and/or gyroscope(s).

The installation of the system on a conventional bicycle consists of three steps. First, the user must secure the system on the bicycle via multiple attachment or anchor points. This step is similar to the installation of a standard bicycle rack. Next, the user secures the handlebar controller on the handlebar. Then, the user connects the handlebar controller to the system. Afterward, the user has to insert a battery pack inside the battery compartment to power the system.

To control the system, the user may select a driving mode using the handlebar controller. Then, the system may provide the requested level of assistance through the friction drive. The handlebar controller may include a display to transmit information to the user. The audio system may be controlled via a separated wireless device like but not limited to a smartphone.

The system's driving system comprises a friction roller in direct contact with the bicycle tire. The friction roller is linked to a drive motor via a belt, a chain, gears or direct drive. In one embodiment, the friction roller is attached at the end of a swing-arm that allows for vertical movements of the friction roller. In one embodiment, the swing-arm is actuated by an electric motor that may be equipped with a gearbox and a leadscrew. This electric motor controls the position of the swing-arm with a lead-screw mechanism. The position of the friction roller may be automatically adjusted in order to provide optimal pressure on the tire. A greater pressure may allow greater acceleration and smaller pressure may limit tire wearing. This system allows the friction drive to be engaged, roller in contact with the tire, or disengage, roller raised over the tire, by the user while riding the bicycle or at rest. The user does not have to dismount from the bicycle to use this system. Furthermore, the automatic adjustment of the friction roller position may be automatic and may not require any action from the user. Another feature of this system is the possibility to detect a deflated tire by measuring a torque applied by the positioning motor versus the swing-arm position.

### BRIEF DESCRIPTION OF THE DRAWINGS

Reference is now made to the accompanying figures in which:
Fig. 1 illustrates a schematic top perspective view, shown partially transparent for explanation purposes, of a friction drive system in accordance with one embodiment of the present disclosure, the friction drive system shown mounted to a bicycle;
Fig. 2 illustrates a schematic bottom perspective view of the friction drive system of Fig. 1;
Fig. 3 illustrates a schematic partially exploded top perspective view of a driving mechanism of the friction drive system of Fig. 1;
Fig. 4 illustrates a schematic partially exploded side perspective view of the driving mechanism of Fig. 3;
Fig. 5 illustrates a schematic view of a controller of the friction drive system of Fig. 1;
Fig. 6 illustrates a schematic view of a main controller of the controller of Fig. 5;
Fig. 7 illustrates a schematic front perspective view of a handlebar controller for actuating the friction drive system of Fig. 1;
Fig. 8 illustrates a top perspective view of the handlebar controller of Fig. 7;
Figs. 8A and 8B are schematic top view of the handlebar controller of Fig. 8 illustrating different contacting regions;
Fig. 8C is a schematic view of a microcontroller for the handlebar controller of Figs. 8A-8B;
Figs. 9A-9D illustrate schematic embodiments of the friction roller of the friction drive system of Fig. 1;
Fig. 10 illustrates a schematic view of a traction control system of the friction drive system of Fig. 1;
Fig. 11 shows a schematic view of a controller of the traction control system of Fig. 10;
Fig. 12 shows a schematic view of an estimator of the traction control system of Fig. 10;
Fig. 13 shows a schematic view of a classifier of the traction control system of Fig. 10; and
Fig. 14 is a schematic rear perspective view of an exerciser apparatus including a bicycle and the friction drive system of Fig. 1.

### DETAILED DESCRIPTION

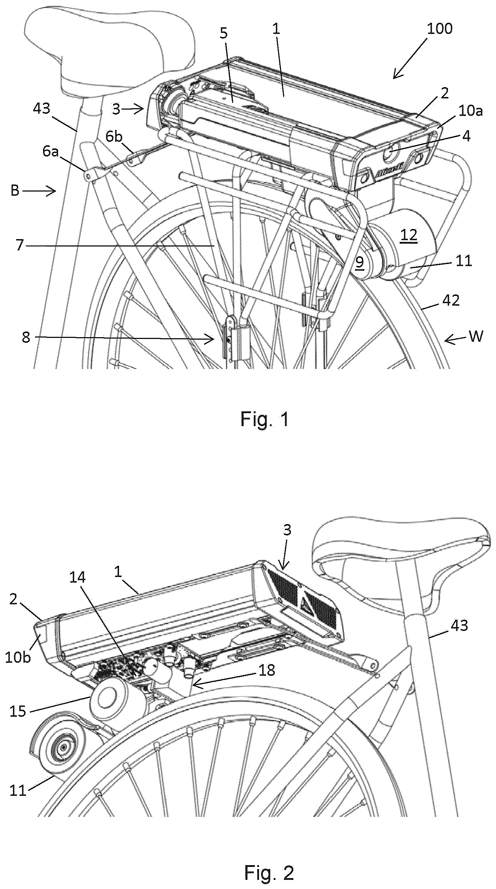

Referring to Figs. 1-2, a friction drive system 100 for a bicycle in accordance with one embodiment is shown mounted to a regular (i.e. non-electric) pedal bicycle B. The present friction drive system 100 is configured to be mounted on the bicycle B in a manner that permits a friction roller 11 of the friction drive system 100 thereof to engage a wheel W of the bicycle B. The friction drive system 100 may be configured to be mounted to any type of bicycle, in order to transform a regular (i.e. non-electric) bicycle into a motorized bicycle without requiring cumbersome modifications to the bicycle B.

As shown, the friction drive system 100 includes a housing 1 that is securable to the bicycle B, for instance, via a frame 43 of the bicycle B. A rack frame 7 may be used for securing the system 100 to the bicycle B. In the embodiment shown, the rack frame 7 has two lateral supports securable to the bicycle frame 43 at anchor points 6a, 6b, and 8. Any suitable means for securing the system 100 to the bicycle frame 43 may be used without departing from the scope of the present disclosure.

In the embodiment shown, the housing 1 has a tailgate 2 and an integrated audio sound system 3. The sound system 3 may be received within a waterproof enclosure. Braking light and turn signals 10a, 10b are integrated in the tailgate 2. As shown, the housing 1 is positioned over the bicycle wheel W. The housing 1 may accommodate one or more independent removable battery packs 5. The tailgate 2 may comprise a lock 4. When unlocked, the tailgate 2 is pivotable to allow access to a battery compartment of the housing 1 configured for removably receiving the battery packs 5.

Referring to Figs. 1-4, the friction drive system 100 includes a driving system 18, also referred to herein as an electric drive train, which is secured to the housing 1. The driving system 18 includes a drive motor 15 secured to a support 53 and that is in driving engagement with a friction roller 11, which is rotatably mounted to a free end of a swing-arm 56. The swing-arm 56 is pivotally mounted to the support 53 at a pivot point P for rotation thereabout. The friction roller 11 is a cantilever wheel mounted to the swing-arm 56. Rotation of the swing-arm 56 about the support 53 changes the distance between the housing 1 and the friction roller 11 and the distance between the friction roller 11 and the bicycle wheel axle. More details regarding this aspect are provided below. The roller 11 is located under the housing 1. A mudguard 12 may be disposed around the roller 11.

In the embodiment shown, the driving engagement between the motor 15 and the friction roller 11 is provided via a transmission T. The transmission T includes pulleys 52, 55 mounted to respective shafts of the motor 15 and of the friction roller 11, and via a strap 54 disposed around the pulleys 52, 55. The strap 54 transfers a rotational input from the pulley 52 to the other pulley 55. Any suitable transmission system for transmitting a rotational input from the motor 15 to the friction roller 11 may however alternately be used without departing from the scope of the present disclosure. For instance, the strap and pulleys may be replaced by a chain, a belt, a timing belt, a gear box, a direct drive or a combination of these.

The friction roller 11 defines a wheel engaging surface 11a thereon that is configured for contacting a tire 42 of one of the wheels W of the bicycle B. As mentioned above, the friction roller 11 is movable relative to the housing 1, and consequently relative to the tire 42 of the wheel. This allows varying a pressure force exerted by the friction roller 11 against the tire 42 of the wheel W, as will be described in further detail below.

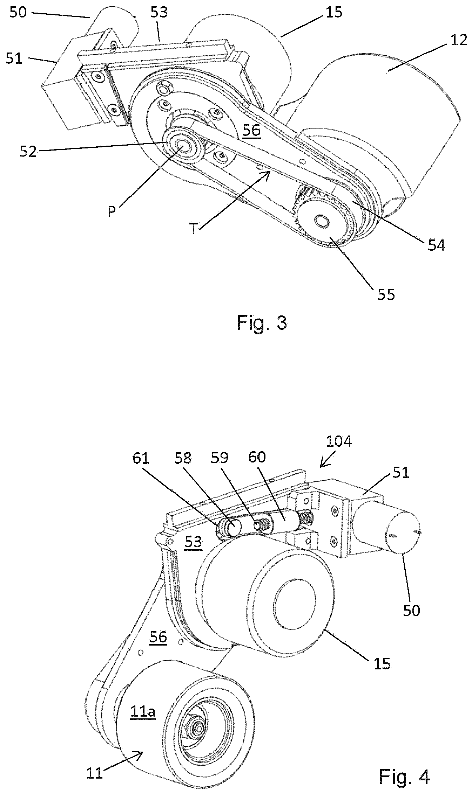

Referring more particularly to Fig. 4, the friction drive system 100 further includes an adjustable pressure system 104 used for changing the distance between the roller 11 and the housing 1 (and therefore relative to the bicycle tire, which is in a fixed position relative to the housing when both are mounted on the frame of the bicycle). In the depicted embodiment, the adjustable pressure system 104 includes an adjustable pressure control motor 50 that is in driving engagement with a linear screw 59, via a gearbox 51. The motor 50 and the gearbox 51 are secured to the support 53. As shown, a slider 60 is in a threading engagement with the linear screw 59 and travels in a slot 61 defined by the support 53. An end of the slider 60 defines a pin 58 that engages the swing-arm 56. Therefore, actuation of the motor 50 induces rotation of the linear screw 59. Rotation of the screw 59 is transmitted in a translational movement of the slider 60 relative to the screw 59 within the slot 61. Such a translational movement of the slider 60 causes the pin 58 to move within the slot 61 thereby inducing rotation of the swing-arm 56 relative to the support 53 about pivot point P. The pin 58 is radially offset from the pivot point P.

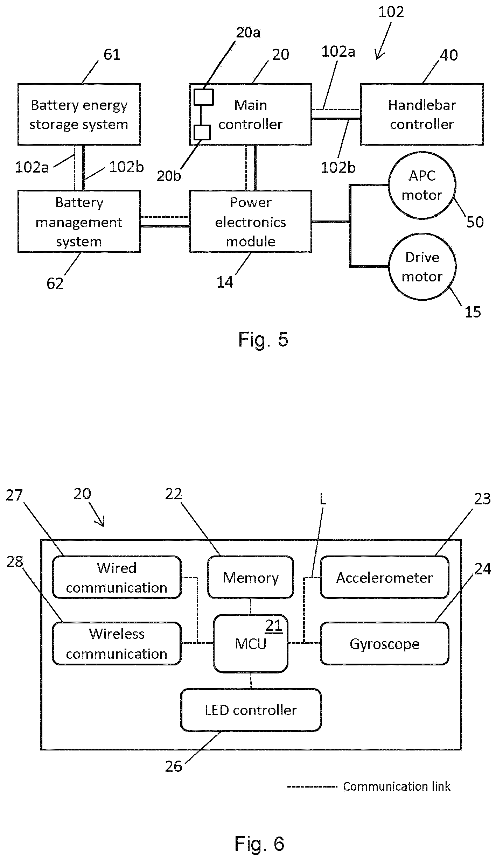

The adjustable pressure system 104 allows movement of the friction wheel 11 so that it can either be engaged or disengaged from contact with the bicycle tire 42. Engagement/disengagement of the friction wheel 11 may be controlled by a button on a human machine interface, which may be for example a handlebar controller 40 (see Figs. 6-7). When engaged, the friction roller 11 allows electric drive, when disengaged, the friction roller 11 is raised off the tire 42 in a way that there is no more contact. Therefore, in a particular embodiment, there is no need to dismount the drive system 100 from the bicycle B to disengage the friction roller 11 from the wheel 42.

When the friction drive system 100 is not providing electrical assistance, it has a tendency to create a lag effect due to inertia of the friction roller 11. Such a lag effect may be unpleasant for the user. The adjustable pressure system 104 therefore allows the user to lift the friction roller 11 out of contact with the tire, in real time during operation of the bicycle, so that there is no contact between the friction roller 11 and the wheel tire 42, and this without having to dismount the system 100 from the bicycle. Hence, the bicycle may be used either in a standard configuration, in which the user provides the power to drive the bicycle, or in a motorized configuration, in which the friction drive system 100 provides power to the rear wheel of the bicycle.

The friction drive system 100 may be secured in to the bicycle frame 43 in a way that the system 100 may not be easily stolen when the bicycle is left unattended in a public space. This allows the user to park the bicycle without having to dismount the system 100 and to carry said system.

In the embodiment shown, the adjustable pressure system 104 automatically adjusts a position of the friction wheel 11 relative to the tire 42. Indeed, when the bicycle B is driven at low speed, a low torque is required and, hence, a smaller normal force is applied on the tire 42 by the roller 11. This might diminish tire and roller wear and improve efficiency. However, when the electrical assistance level desired is high, a higher normal force (applied by the friction roller 11 on the tire 42) is required and, hence, a higher normal force is applied on the tire 42 by the roller 11 to improve the total friction force between the tire 42 and the roller 11.

The automatic and real-time adjustment feature of the adjustable pressure system 104 is provided by a controller 20 (see Fig. 5) that may correlate a measured speed with an amount of pressure to be provided between the tire 42 and the friction roller 11. Stated otherwise, the controller 20 may receive a value of a desired speed of the bicycle B and adjust a pressure force between the tire 42 and the friction roller 11 in function of the desired speed.

In the embodiment shown, the adjustable pressure system 104 is able to detect a deflated tire. The adjustable pressure system 104 allows normal force measurement through the motor 50 for this purpose. The adjustable pressure system 104 allows the position of the roller 11 to remains static even when the adjustable pressure system motor 50 is not operated.

Referring also Figs. 5-6, an electric circuit 102 of the friction drive system 100 is shown. The circuit 102 includes a battery energy storage system 61 operatively connected to a battery management system 62. The circuit 102 further includes a main controller 20 and a power electronics module 14. The main controller 20 is operatively connected to the battery energy storage system 61 via both the battery management system 62 and the power electronics module 14. The circuit 102 further has handlebar controller 40 operatively connected to the main controller 20 and configured to be engaged by a user of the bicycle B for controlling the driving system 18. Both of the motors 15 and 50 are operatively connected to the power electronics module 14. As shown more specifically on Fig. 5, the different components of the circuit 102 are connected via both communication links 102a and power links 102b. The communication links 102a may be wires or wireless signals. The communication links 102a are part of a communication bus. The power electronics module 14 controls the drive motor 15 and the adjustable pressure control motor 50. The main controller 20 includes a processing unit, or processor 20a and a non-transitory computer readable medium 20b having stored thereon instructions executable by the processing unit 20a.

Referring now to Fig. 6, a schematic view of components contained within the main controller 20 is shown. This main controller 20 includes a microcontroller 21 that is connected (e.g. via wiring or other suitable communication means) to several components via communication links L. The microcontroller 21 has an external nonvolatile memory 22 and is operatively connected to sensors. The sensors may include, for instance, accelerometers 23 and/or gyroscopes 24. The main controller 20 may include a LED driver 26 to control turn and brakes signal 10a, 10b. The microcontroller 21 has different communication buses: wired buses 27 to communicate with others electronics components in the system like the handlebar controller 40 and the power electronics module 14. The main controller 20 may further include wireless communication buses 28 to exchange information with external devices, such as a smartphone. The sensors 23, 24 may be used to automatically trigger turning lights and a breaking light, and to notify a user of an impending impact.

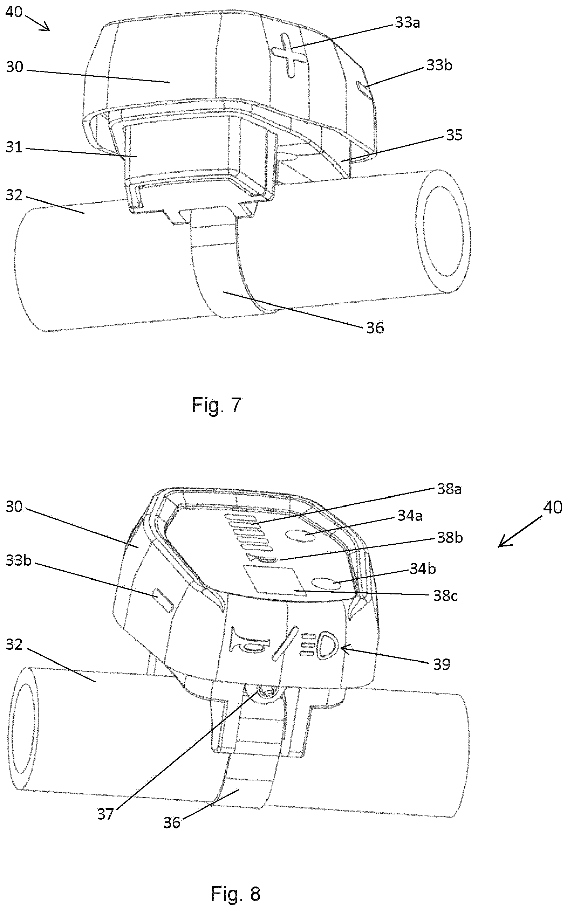

Referring now to Figs. 7-8, the handlebar controller is shown at 40. The handlebar controller 40 may be fixed to a section of a bicycle handlebar 32 with a clamp 36 that is holding a frame 35 of the handlebar controller 40 with a screw or clip 37. Other configurations are contemplated. The handlebar controller 40 has a cover 30 mounted on the frame 35.

The handlebar controller 40 is operable to be actuated by a user (e.g. the bicycle rider) and may include a front light 31 fixed to the frame 35. On the top of the cover 30, a display is provided that may include bar graph 38a, icons 38b or alphanumeric information 38c. The controller 40 may include one or more contact points located on the side 33a, 33b and on the top 34a, 34b of the cover 30. By pushing the cover from top or sides, it is possible to activate buttons located on the frame 35 underneath the cover 30. A seal (not shown) allows limited movement between the cover 30 and the frame 35 of the handlebar controller 40. The buttons may be used to control the turning lights and a level of power supplied from the battery pack 5 to the drive motor 15.

In the embodiment shown, the handlebar controller cover 30 is secured on its body 35 using fixtures that might allow small movements of the cover 30 relative to the body 35. A soft sealing gasket may be placed between to cover 30 and the body 35 to make the handlebar controller 40 water-resistant and to maintain the cover 30 under spring load. This design might also provide a physical feedback to the user.

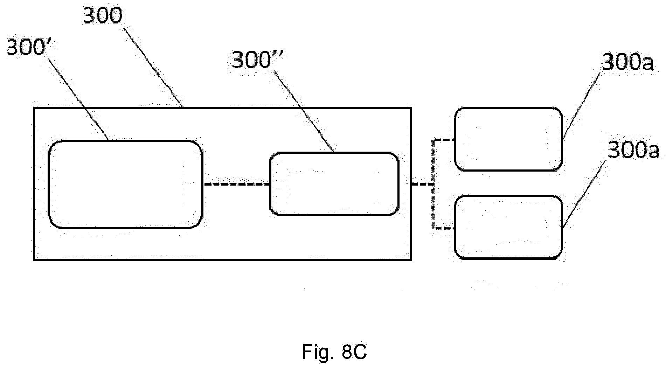

The handlebar controller 40 has a microcontroller 300 that exchange information with others devices of the friction drive system 100. For instance, the microcontroller 300 may be operatively connected to the main controller 20 as illustrated in Fig. 5. As illustrated in Fig. 8C, the microcontroller 300 includes a processing unit 300' and a computer readable medium 300" operatively connected to the processing unit 300'.

As aforementioned, the handlebar controller 40 integrates multiple indicators that might allow the user to get information about the state of charge of the battery, the level of assistance and the state of the system for example. In the embodiment shown, this information is displayed through indicators 34a, 34b, 38a, 38b, 38c, which may be LED or LCD and which may be located on the top of the controller handlebar controller **40**.

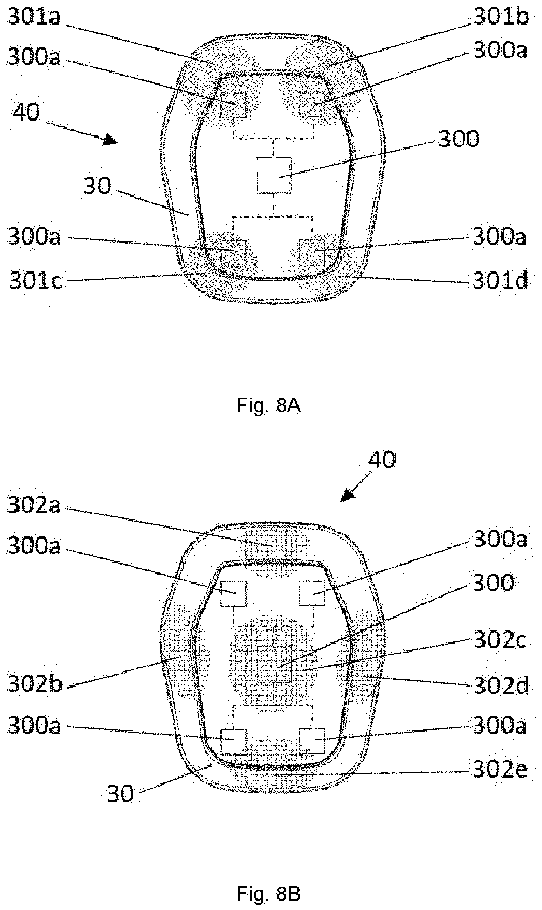

Referring now to Figs. 8A, 8B, the handlebar controller 40 may allow the user to simply press the whole controller cover 30 in different locations to perform different actions. In the depicted embodiment, four buttons 300a are located on the controller electronic circuit attached to the body 35 under the external cover 30. The buttons 300a may alternatively be secured to the cover 30. Each of the buttons 300a may be operatively connected to the microcontroller 300 via suitable connections 300b, which may be wires and/or a wireless beam. More or less than four buttons may be used without departing from the scope of the present disclosure.

Figure 8A shows the contact areas 301a, 301b, 301c, 301d (illustrated with a checked pattern) to activate single buttons. In other words, each of the buttons 300a may be activated by pressing a respective one of the contact areas 301a, 301b, 301c, 301d located on the cover 30.

Referring now to Fig. 8B, it is possible to create more inputs using only the four buttons 300a previously described. For instance, two or more buttons may be simultaneously pressed to activate a function different than functions associated with each of the two or more buttons pressed individually.

Fig. 8B illustrates five other contact areas 302a, 302b, 302c, 302d, 302e used to activate multiple buttons 300a at once. In the embodiment shown, the contact area 302a is used to simultaneously activate the two buttons 300a at the front of the cover 30. The contact area 302b is used to simultaneously activate the two buttons 300a on the left side of the cover 30. The contact area 302d is used to simultaneously activate the two buttons 300a on the right side of the cover 30. The contact area 302e is used to simultaneously activate the two buttons located at the rear of the cover 30. And, the contact area 302c is used to simultaneously activate the four buttons 300a. Herein, a number of the contact areas is greater than a number of the buttons 300a.

The contact areas associated each with a respective one of the buttons 300a may be referred as primary areas 301a, 301b, 301c, 301d and the contact areas associated with one or more of the buttons 300a may be referred as secondary contact areas 302a, 302b, 302c, 302d, 302e.

In the depicted embodiment, the microcontroller 300 may be able to receive input signals from each of the buttons 300a and is able to generate a number of output signals that is greater than a number of the buttons.

Herein, "simultaneously" means that the a time lapse between the activation of a first one of the buttons 300a and the activation of a second one of the buttons 300a is sufficiently small for the microcontroller 300 to consider that the first and second buttons are conjointly activated. The time lapse may be in the order of a few milliseconds.

In a particular embodiment, the multi-press feature offers several distinct advantages. The controller might be easier to use even if the user is not actively looking at the handlebar controller 40. A user might be able to keep his eyes on the road while using the handlebar controller 40. Moreover, the multi-press may allow emergency action to be performed in an intuitive manner. For example, and in a particular embodiment, the user can activate the region 302c, which is located at a center of the cover 30, to activate a horn by applying pressure over the whole controller cover 30 in a similar manner than a driver would use a car horn. The design of the disclosed handlebar controller 40 might be more suitable to use to older users or people with fine motor skills problems and/or in cold climate where users may use the controller while wearing gloves. Indeed, having the buttons 300a hidden under the cover 30 might allow their activation without having to locate a precise small target area on the handlebar controller 40.

The table below present different functions that may be associated with the contact areas described above. It is understood that this is exemplary only and other functions may be configured without departing from the scope of the present disclosure.

| Contact area | Mode | Function |
|---|---|---|
| 301a | Normal | Assist Level Up |
| 301b | Normal | Power ON/OFF |
| 301c | Normal | Assist Level Down (Regenerative braking with long press) |
| 301d | Normal | Next Mode |
| 302c | Normal | Horn |
| 302e | Normal | Fast Blinking Light |
| 301a | Configuration | Alarm Sensitivity Up |
| 301b | Configuration | Power ON/OFF |
| 301c | Configuration | Alarm Sensitivity Down |
| 301d | Configuration | Next Mode |
| 302a | Configuration | Horn Volume Up |
| 302e | Configuration | Horn Volume Down |

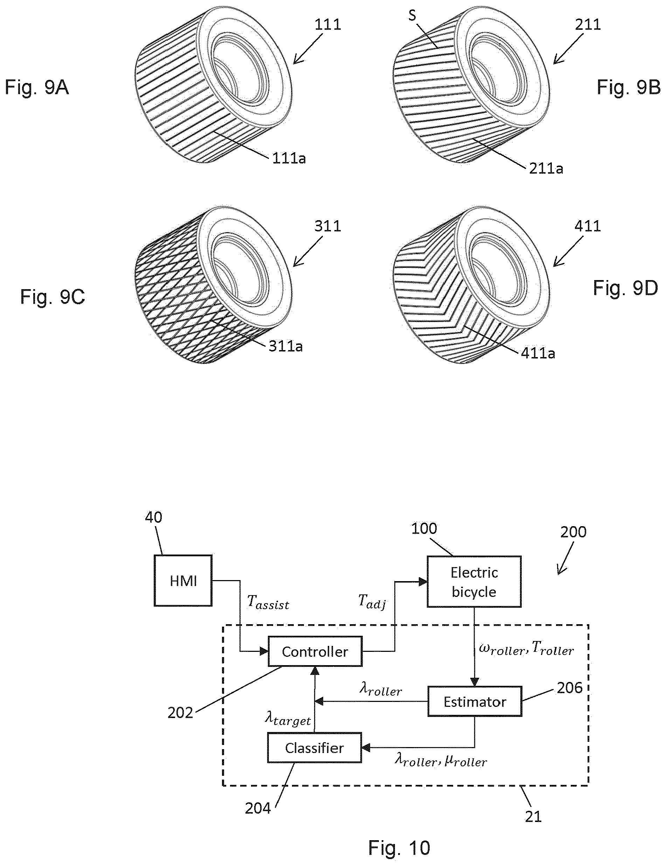

Referring now to Figs. 9A-9D, friction rollers 111, 211, 311, and 411 in accordance with four different embodiments are shown. The friction rollers 11, 111, 211, 311 and 411 may be made of a rubber like material, such as but not limited to, polyurethane, which is disposed around a core of rigid material. As shown in the embodiments of Figs. 9A-9D, the wheel engaging surfaces 111a, 211a, 311a, 411a of the friction rollers 111, 211, 311, 411 have a plurality of sipes S formed therein, for increasing adherence with the tire 42. The sipes S are fine cuts that, in a particular embodiment, are made with minimal material loss. The depth of the sipes is a function of a size of the roller and of the material, and is selected to obtain optimal performance. The sipes S help to increase the friction coefficient between the roller and the tire 42, which may be particularly effective in wet conditions. As shown, different patterns of sipes may be used, four of which are shown as example. The sipes S in the wheel engaging surface 111a of the friction roller 11 of Fig. 9A are disposed in parallel configuration, and are thus substantially evenly spaced apart and extend across a full width of the wheel engaging surface 111a. In the embodiment of Fig. 9B, the sipes S of the wheel engaging surface 211a are similarly disposed parallel to one another and similarly extend across the full width of the wheel engaging surface 211b, however in this embodiment the sipes are disposed at an angle relative to a centerline axis (e.g. corresponding to a plane within which the wheel of the bicycle lies). In the embodiment of Fig. 9A, the sipes are, in contrast, substantially perpendicular to such a centerline axis (and relative to the wheel plane). In the embodiment of Fig. 9C, the sipes S of the wheel engaging surface 311a are arranged in a cross-crossing or diamond shaped pattern that repeats across the entirely of the wheel engaging surface 311a. For example, a first set of sipes S are disposed at a first angle relative to the aforementioned centerline axis and wheel plane, wherein a second set of sipes are disposed in an opposite angle, such that intersect the first set of sipes to form the criss-crossing or diamond shaped pattern as shown in Fig. 9C. In the embodiment of Fig. 9D, two sets of sipes S are also provided in the wheel engaging surface 411a, each at different angles, however these two sets of sipes meet at the centerline axis (and the wheel plane) to form a repeating chevron type pattern. Other configurations are however also contemplated. The straight sipes illustrated in Fig. 9A might offer performances better than that of the sipes illustrated in Figs. 9B-9D.

As the driving system 18 relies on the friction roller 11 to transfer power from the drive motor 15 to the bicycle wheel W via friction, under certain conditions several drawbacks can exist if not adequately compensated for. These drawbacks may include, for example, a potential loss of performance in wet conditions, a drop in overall efficiency, and an additional wear on both the friction roller and the bicycle tire. Indeed, a maximum amount of force that can be transferred between the roller 11 and the wheel W is limited by the maximum friction between the roller 11 and the bicycle wheel, and more specifically its tire 42.

Therefore, the present system also includes a traction control system 200 that is operable for controlling a torque generated by the friction roller 11. The traction control system 200 may be realised with features illustrated in Fig. 10. As shown, the traction control system 200 comprises a human-machine interface, which corresponds to the handlebar controller 40 in the present embodiment, the bicycle driving system 100, a controller module, also referred to as an anti-slip controller, 202, a model based estimator module 204, and a classifier module 206. The anti-slip controller 202 receives a torque request *Tₐₛₛᵢₛₜ* from a user via the handlebar controller 40. The anti-slip controller 202 converts the torque request in an adjusted torque command *T_{adj}* and sends the adjusted torque command to the driving system 18 of the friction drive system 100. The rotational speed of the friction roller *ωᵣₒₗₗₑᵣ* and a measured torque *Tᵣₒₗₗₑᵣ* on the roller 11 are fed to the estimator module 204, which estimates a slip ratio *λᵣₒₗₗₑᵣ* and a coefficient of friction *µᵣₒₗₗₑᵣ* of the roller 11 relative to the tire 42. This information is fed to the classifier module 206 to classify the conditions in which the roller 11 is used and to compute an optimal slip ratio *λ_{target}*. The optimal slip ratio is used as a feedback for the controller 202 to complete the loop and to determine an updated value of the adjusted torque command in function of the determined optimal slip ratio and the determined slip ratio. The new adjusted torque command is fed to the driving system.

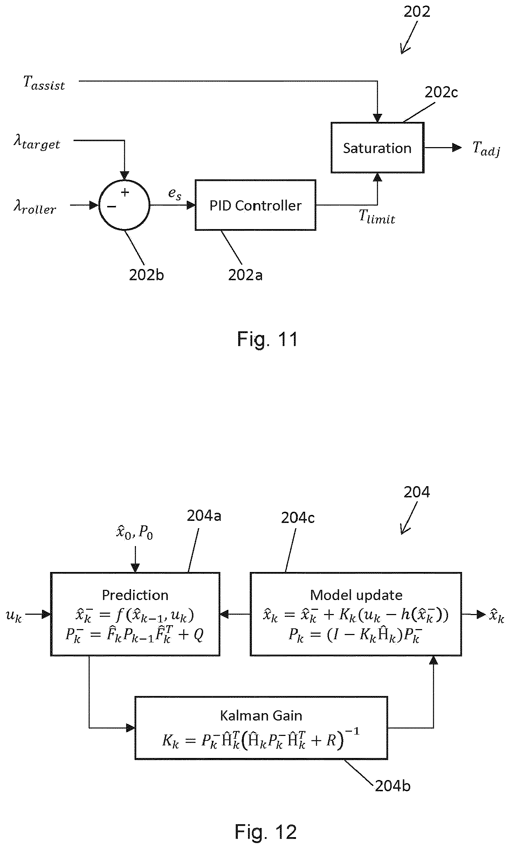

Referring now to Fig. 11, the controller 202 is shown in greater detail. In the embodiment shown, the controller 202 uses a PID controller 202a. An error calculator 202b calculates an error *eₛ* between the instantaneous slip ratio *λᵣₒₗₗₑᵣ* and the optimal slip ratio *λ_{target}.* A correction is applied on this error based on proportional, integral and derivative terms. The correction is applied by the PID controller 202a. Thus, a torque limit *Tₗᵢₘᵢₜ* is obtained. The assistance torque *Tₐₛₛᵢₛₜ* requested by the user is then saturated in a saturation module 202c using this upper torque limit. The adjusted torque *T_{adj}* is sent to the drive motor 15 of the drive system 100.

Referring now to Fig. 12, the estimator 204 is shown in greater detail. In the embodiment shown, the estimator module 204 uses an extended Kalman filter (EKF) technique to estimate the rotational speed of the wheel W and the friction coefficient of the friction roller 11. The EKF includes three steps. First, it gives a prediction of the state vector *xₖ* via a predictor module 204a. This prediction is made using a model of the electric bicycle B and a vector of inputs *uₖ*. At each iteration, a Kalman gain *Kₖ* is adjusted from a covariance matrix *Pₖ* and a measurement matrix *Hₖ* within an adjustment module 204b. Finally, the state vector *xₖ* is updated, in an updater module 204c, using the Kalman gain as well as the covariance matrix *Pₖ*. The input vector *uₖ* includes the measures of the roller 11 rotational speed, the assistance torque requested by the user and the normal force applied on the roller 11. The state vector *xₖ* includes the rotational speed of both roller 11 and wheel W; and the coefficient of friction *µᵣₒₗₗₑᵣ*. State vector *x*₀ and covariance matrix *P*₀ are initial values of the EKF for its first iteration.

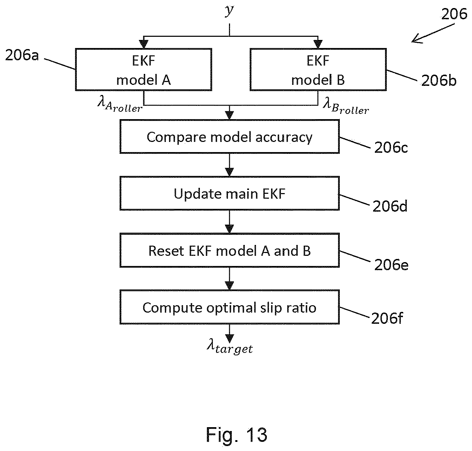

Referring now to Fig. 13, the classifier 206 is shown in greater detail. The classifier 206 uses the estimations of the friction coefficient to determine in which conditions (e.g., wet, dry) the roller is used. The classifier 206 computes an optimal slip ratio value *λ_{target}* that is sent to the controller 202. To achieve this, at least two sub EKF 206a, 206b are initialized. Those EKF use a fixed model, for example model A can represents dry conditions and model B wet conditions. Both models estimations, *λ_{Aᵣₒₗₗₑᵣ}* and *λ_{Bᵣₒₗₗₑᵣ}* are compared in a comparison module 206c and the best model is selected to update the main EKF in an updater module 206d. Classifier is then reset in a reset module 206e and it outputs the optimal slip ratio *λ_{target}* that is calculated in an optimal slip ratio calculator module 206f.

In a particular embodiment, the disclosed friction drive system 100 is lightweight compared to prior art system and is able to fit most conventional bicycles and offers good performances in wet condition. The system 100 might be easy to install and may have simple controls. Moreover, in a particular embodiment, a safety of the user is increased because of the integrated signal lights. The traction control system and the adjustable pressure system might allow for a better control of the adherence between the friction roller and the wheel and might allow an increased lifespan of the tire.

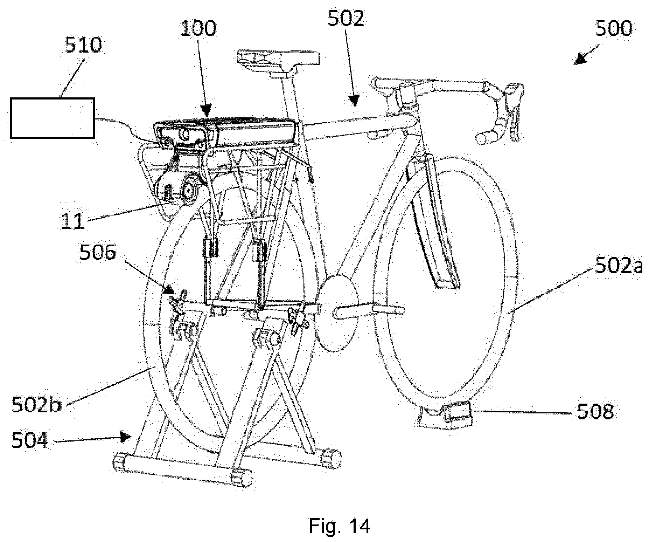

Referring to Fig. 14, an exerciser in accordance with one embodiment is generally shown at 500. The exerciser 500 includes a bicycle 502, the friction drive system 100 described herein above with reference to Figs. 1-6, and a support device 504.

The bicycle has front and rear wheels 502a, 502b that include tires for creating a contact with a road. When the bicycle 502 is used as part of the exerciser 500, it might be necessary to distance at least the rear wheel 502b from the ground to avoid movement of the bicycle 502 relative to the ground.

In the embodiment shown, the exerciser 500 includes the support device 504 used for elevating the rear wheel 502b from the ground. The support device 504, also referred to as a stand, may include a locking mechanism 506 for securing the bicycle 502 to the stand 504. In the embodiment shown, the locking mechanism 506 secures the bicycle 502b to the stand 504 at the axle of the rear wheel 502b. Any suitable stand may be used without departing from the scope of the present disclosure.

In the depicted embodiment, the exerciser 502 is free of resistive roller and flywheel. This might offer a simpler exerciser than an exerciser including such resistive roller and/or flywheel.

In the embodiment shown, a riser block 508 is used for elevating the front wheel 502a from the ground. In a particular embodiment, the riser block 508 increases stability of the bicycle compared to an exerciser lacking such block 508.

The handlebar controller described herein above with reference to Figs. 7, 8, 8A, and 8B may be used to convert the friction drive system 100 from the regular driving mode to a training mode. Another external device connected to the friction drive system 100 may be used to switch the system 100 in the training mode. The external device may be, for instance, a smart phone.

In the training mode, energy is provided by the user to the rear wheel 502b and from the rear wheel 502b to the friction roller 11 described above with reference to Figs. 1-4. Then, the mechanical energy provided to the rear wheel 502b by the user is transformed in electrical energy by the drive motor 15 (Fig. 4).

The energy may be used to recharge the battery packs 5 (Fig. 1). However, energy might have to be dissipated in a situation in which the battery packs 5 are fully recharged.

In the embodiment shown, a load 510 is operatively connected to the friction drive system 100. The load 510 may be, for instance, a heater, a fan, and so on. The load 510 is used to dissipate the electrical energy that has been created by the user and the friction drive system 100.

In a particular embodiment, the disclosed exerciser reduces wear on the tire 502b compared to a trainer using a steel roller in contact with the tire 502b. The disclosed exerciser might eliminate the need to use a trainer tire as the user may be able to keep its regular tire. The friction drive system 100 might allow to convert an existing bicycle 502 both in an electric bicycle and an exerciser or trainer. The friction drive system 100 might allow to have an instantaneous and precise control over the resistance applied to the rear wheel 502b to oppose the rider effort. As in electric bicycle mode, the system 100 can connect to external devices such as smartphones through wireless connection in trainer mode.

Embodiments disclosed herein includes:
A. A friction drive system for a bicycle, comprising: a housing configured to be secured to a frame of the bicycle; a friction roller rotatably mounted to the housing via an actuator, the friction roller defining a wheel engaging surface configured for engaging a wheel of the bicycle and for driving the wheel via friction between the wheel engaging surface and the wheel, the wheel engaging surface movable relative to an axis of rotation of the wheel between a plurality of positions; a motor secured to the housing and in driving engagement with the friction roller, the motor operatively connected to a power source; and a control system including: a traction control system operatively connected to both of the motor and the power source, the traction control system having a current modulator operable to vary a magnitude of a current distributed from the power source to the motor for varying a torque exerted by the friction roller; and/or a pressure control system operatively connected to the actuator and controlling the actuator for varying the distance between the wheel engaging surface and the axis of rotation of the wheel for varying a contact force between the friction roller and the wheel.
B. An exerciser comprising: a support device securable to a bicycle and configured to distance a rear wheel of the bicycle from a ground when the bicycle is secured to the support device; a friction drive system securable to the bicycle at a location spaced apart from the support device, for opposing rotation of the rear wheel of the bicycle, the friction drive system including a friction roller and a motor in driving engagement with the friction roller, the friction roller defining a wheel engaging surface configured for engaging the rear wheel of the bicycle and for being driven by the rear wheel via friction between the wheel engaging surface and the rear wheel, the motor operatively connected to a load for dissipating electrical energy generated from mechanical energy provided by a user and transmitted from the rear wheel to the friction roller.
C. A friction drive system for a bicycle, the friction drive system comprising: a housing configured to be secured to a frame of the bicycle; and a driving system secured to the housing, the driving system including a friction roller rotatably mounted thereto, and a motor in driving engagement with the friction roller, the friction roller defining a wheel engaging surface configured for engaging a wheel of the bicycle and for driving the wheel via friction between the wheel engaging surface and the wheel, the driving system further including a traction control system adjusting a torque of the friction roller and/or an adjustable pressure system moving the friction roller relative to the housing and the wheel for varying a contact force between the friction roller and the wheel, the driving system further including a driving controller operatively connected to the traction control system and/or to the adjustable pressure system for controlling the torque exerted by the friction roller and/or the contact force between the friction roller and the wheel.

The embodiments A, B, C may include any of the following elements in any combinations.

Element 1: the control system includes both of the traction control system and the pressure control system, the control system controlling both of the torque exerted by the friction roller on the wheel and the contact force exerted between the friction roller and the wheel of the bicycle. Element 2: the pressure control system includes a support secured to the housing and a swing-arm pivotally mounted to the support, the friction roller rotatably mounted at a free end of the swing-arm, the actuator of the pressure control system being a motor in driving engagement with the swing-arm for rotating the swing-arm about the support. Element 3: the motor in driving engagement with a screw, a slider in a threading engagement with the screw such that rotation of the screw translates in a translational movement of the slider along the screw, the slider engaging the swing-arm at a location offset from a pivot point between the swing-arm and the support. Element 4: a gearbox, the motor in driving engagement with the screw via the gearbox. Element 5: the motor is secured to the support, the pressure control system further including a transmission for transmitting a rotational input of the motor to the friction roller. Element 6: the transmission includes two pulleys each integrally rotating with a respective one of the motor and the friction roller, and a strap disposed around the pulleys. Element 7: the control system includes a controller operatively connected to the pressure control system for varying a position of the friction roller relative to the housing as a function of a speed of the bicycle. Element 8: the wheel engagement surface of the friction roller comprises a plurality of sipes therein. Element 9: each of the plurality of sipes extends substantially parallel to an axis of rotation of the friction roller. Element 10: the friction roller is made of an elastomeric material. Element 11: the motor is an electric motor, and wherein the power source is a battery pack contained within the housing. Element 12: the control system includes a controller having a processing unit and a non-transitory computer readable medium having stored thereon instructions executable by the processing unit for: receiving a torque request from a user; converting the torque request in an adjusted torque command; sending the adjusted torque command to a motor of the friction drive system, the motor in driving engagement with the roller; determining a slip ratio and a friction coefficient between the roller and the wheel in function of a rotational speed of the roller and a torque on the roller; determining an optimal slip ratio of the friction drive system in function of the determined slip ratio and friction coefficient; and determining an updated value of the adjusted torque command in function of the determined optimal slip ratio and the determined slip ratio. Element 13: calculating a difference between the determined slip ratio and the determined optimal slip ratio, and determining the optimal slip ratio in function of the calculated difference and the determined torque. Element 14: determining the slip ratio and the friction coefficient includes measuring the rotational speed of the roller and measuring the torque. Element 15: determining the optimal slip ratio includes determining operating conditions of the friction drive system. Element 16: a handlebar controller, including: a body securable to a handlebar of the bicycle; a cover disposed over the body and movable relative to the body; a plurality of buttons secured to the cover or the body, the plurality of buttons being actuatable via movements of the cover relative to the body, wherein the cover defines contact areas engageable by a user, a number of the contact areas greater than a number of the buttons, the contact areas including primary areas and at least one secondary area, each of the primary areas associated with a respective one of the plurality of buttons such that engagement of each of the primary areas actuates solely a respective one of the plurality of buttons, the at least one secondary area associated with at least two of the plurality of buttons such that engagement of the at least one secondary area actuates at least two of the plurality of buttons; and a controller operatively connected to the plurality of buttons, the controller receiving input signals from the plurality of buttons and generating an output signal in function of the contacting areas engaged by the user. Element 17: including both of the traction control system and the pressure control system, the driving controller controlling both of the torque exerted by the friction roller on the wheel and the pressure force exerted between the friction roller and the wheel of the bicycle. Element 18: a battery management system operatively connected to the battery pack.

Embodiment D: A method for controlling traction in a friction drive system for a bicycle, the friction drive system having a roller in frictional engagement with a wheel of the bicycle, the method comprising: receiving a torque request from a user; converting the torque request in an adjusted torque command; sending the adjusted torque command to a motor of the friction drive system, the motor in driving engagement with the roller; determining a slip ratio and a friction coefficient between the roller and the wheel in function of a rotational speed of the roller and a torque on the roller; determining an optimal slip ratio of the friction drive system in function of the determined slip ratio and friction coefficient; and determining an updated value of the adjusted torque command in function of the determined optimal slip ratio and the determined slip ratio.

The embodiment D may include any of the following elements in any combinations.

Element 20: determining the slip ratio and the friction coefficient includes measuring the rotational speed of the roller and measuring the torque. Element 21: determining the optimal slip ratio includes determining operating conditions of the friction drive system. Element 22: further comprising calculating a difference between the determined slip ratio and the determined optimal slip ratio, and determining the optimal slip ratio in function of the calculated difference and the determined torque.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure, and such modifications are intended to fall within the appended claims.

## Claims

1. A friction drive system for a bicycle, comprising:
a housing configured to be secured to a frame of the bicycle;
a friction roller rotatably mounted to the housing via an actuator, the friction roller defining a wheel engaging surface configured for engaging a wheel of the bicycle and for driving the wheel via friction between the wheel engaging surface and the wheel, the wheel engaging surface movable relative to an axis of rotation of the wheel between a plurality of positions;
a motor secured to the housing and in driving engagement with the friction roller, the motor operatively connected to a power source; and
a control system including:
a traction control system operatively connected to both of the motor and the power source, the traction control system having a current modulator operable to vary a magnitude of a current distributed from the power source to the motor for varying a torque exerted by the friction roller; and/or
a pressure control system operatively connected to the actuator and controlling the actuator for varying the distance between the wheel engaging surface and the axis of rotation of the wheel for varying a contact force between the friction roller and the wheel.

2. The friction drive system of claim 1, wherein the control system includes both of the traction control system and the pressure control system, the control system controlling both of the torque exerted by the friction roller on the wheel and the contact force exerted between the friction roller and the wheel of the bicycle.

3. The friction drive system of claim 1 or 2, wherein the pressure control system includes a support secured to the housing and a swing-arm pivotally mounted to the support, the friction roller rotatably mounted at a free end of the swing-arm, the actuator of the pressure control system being a motor in driving engagement with the swing-arm for rotating the swing-arm about the support.

4. The friction drive system of claim 3, wherein the motor in driving engagement with a screw, a slider in a threading engagement with the screw such that rotation of the screw translates in a translational movement of the slider along the screw, the slider engaging the swing-arm at a location offset from a pivot point between the swing-arm and the support.

5. The friction drive system of any one of claims 1 to 4, wherein the control system includes a controller operatively connected to the pressure control system for varying a position of the friction roller relative to the housing as a function of a speed and/or torque of the bicycle.

6. The friction drive system of any one of claims 1 to 5, wherein the wheel engagement surface of the friction roller comprises a plurality of sipes therein.

7. The friction drive system of claim 6, wherein the friction roller is made of an elastomeric material and each of the plurality of sipes extends substantially parallel to an axis of rotation of the friction roller.

8. The friction bicycle drive system of any one of claims 1 to 7, wherein the motor is an electric motor, and wherein the power source is a battery pack contained within the housing.

9. The friction drive system of any one of claims 1 to 8, wherein the control system includes a controller having a processing unit and a non-transitory computer readable medium having stored thereon instructions executable by the processing unit for:
receiving a torque request from a user;
converting the torque request in an adjusted torque command;
sending the adjusted torque command to a motor of the friction drive system, the motor in driving engagement with the roller;
determining a slip ratio and a friction coefficient between the roller and the wheel in function of a rotational speed of the roller and a torque on the roller;
determining an optimal slip ratio of the friction drive system in function of the determined slip ratio and friction coefficient; and
determining an updated value of the adjusted torque command in function of the determined optimal slip ratio and the determined slip ratio.

10. The friction drive system of claim 9, further comprising calculating a difference between the determined slip ratio and the determined optimal slip ratio, and determining the optimal slip ratio in function of the calculated difference and the determined torque.

11. The friction drive system of claim 9 or 10, wherein determining the slip ratio and the friction coefficient includes measuring the rotational speed of the roller and measuring the torque.

12. The friction drive system of any one of claims 9 to 11, wherein determining the optimal slip ratio includes determining operating conditions of the friction drive system.

13. The friction drive system of any one of claims 1 to 12, further comprising a handlebar controller, including: a body securable to a handlebar of the bicycle; a cover disposed over the body and movable relative to the body; a plurality of buttons secured to the cover or the body, the plurality of buttons being actuatable via movements of the cover relative to the body, wherein the cover defines contact areas engageable by a user, a number of the contact areas greater than a number of the buttons, the contact areas including primary areas and at least one secondary area, each of the primary areas associated with a respective one of the plurality of buttons such that engagement of each of the primary areas actuates solely a respective one of the plurality of buttons, the at least one secondary area associated with at least two of the plurality of buttons such that engagement of the at least one secondary area actuates at least two of the plurality of buttons; and a controller operatively connected to the plurality of buttons, the controller receiving input signals from the plurality of buttons and generating an output signal in function of the contacting areas engaged by the user.

14. A method for controlling traction in a friction drive system for a bicycle, the friction drive system having a roller in frictional engagement with a wheel of the bicycle, the method comprising:
receiving a torque request from a user;
converting the torque request in an adjusted torque command;
sending the adjusted torque command to a motor of the friction drive system, the motor in driving engagement with the roller;
determining a slip ratio and a friction coefficient between the roller and the wheel in function of a rotational speed of the roller and a torque on the roller;
determining an optimal slip ratio of the friction drive system in function of the determined slip ratio and friction coefficient; and
determining an updated value of the adjusted torque command in function of the determined optimal slip ratio and the determined slip ratio.

15. An exerciser comprising: a support device securable to a bicycle and configured to distance a rear wheel of the bicycle from a ground when the bicycle is secured to the support device; a friction drive system securable to the bicycle at a location spaced apart from the support device, for opposing rotation of the rear wheel of the bicycle, the friction drive system including a friction roller and a motor in driving engagement with the friction roller, the friction roller defining a wheel engaging surface configured for engaging the rear wheel of the bicycle and for being driven by the rear wheel via friction between the wheel engaging surface and the rear wheel, the motor operatively connected to a load for dissipating electrical energy generated from mechanical energy provided by a user and transmitted from the rear wheel to the friction roller.
